# EUROPEAN PATENT APPLICATION

(11) **EP 1 659 752 A1**
(43) Date of publication of application: **24.05.2006**
(21) Application number: 04027757.6
(22) Date of filing: 23.11.2004
(51) Int. Cl.: H04L 29/06, H04L 12/24

(54) **System and method for snmp packet filtering for printing devices**

(71) Applicant: Toshiba Corporation, Mishima-shi, Shizuoka 411-8520 (JP)
(72) Inventor: Lee, Sheng, Irvine, CA 92614 (US)
(74) Representative: Kramer - Barske - Schmidtchen

(57) **Abstract**

The present invention is directed to a system and method for filtering packets for a printing device. An IP address filter resides within an SNMP agent and acts to filter incoming SNMP packets, thereby restricting the visibility of the printing device to a small select group of users. An administrator determines the range of IP addresses to either allow access or reject. The filter comprises a reference IP address, within the range of administrator selected addresses and assigns an action corresponding to the selected addresses. The action may be either allowing the SNMP packet to be processed; or rejecting the SNMP packet and dropping the packet without replying to the sending address. To determine if the incoming packet source address matches the reference address, a 32-bit mask is also included within the filter.

## Description

### Background of the Invention

The present invention pertains generally to computer network administration. More particularly, the present invention is related to filtering data packets using communications protocols.

Computer based networks, such as the Internet, transmit packets of information across its system. A packet is a sequence of binary digits, including data and control signals, that is transmitted and switched as a composite whole. The data, control signals, and possibly error control information, are arranged in a specific format. These formats may be expressed in the form of a protocol. A protocol is a formal set of conventions governing the format and control of interaction among communicating functional units. Protocols may govern portions of a network, types of services, or even administrative procedures. In a layered communications system architecture, such as the Internet, an intranet, Ethernet, or other computer network, a protocol is a formal set of procedures that are adopted to facilitate functional interoperation within that layered hierarchy. A resultant use of protocols is the ability of information systems to exchange information.

Most computer networks use the transmission control protocol, or TCP. The transmission control protocol is a network protocol that controls host-to-host transmissions over packet-switched communications networks. Acting in concert with TCP is the Internet protocol, or IP protocol. The IP protocol is a standard protocol designed for use in interconnected systems of packet-switched computer networks. The IP protocol provides for transmitting blocks of data called datagrams from sources to destinations, where sources and destinations are hosts identified by fixed-length addresses. The Internet protocol also provides for fragmentation and reassembly of long datagrams, if necessary, for transmission through small-packet networks. Fragmentation involves the breaking down of a long datagram into multiple datagrams, which are then transmitted and reassembled at the destination computer. The Transmission Control Protocol/Internet Protocol, or TCP/IP, controls how datagrams, or packets, are transmitted over the Internet. The TCP/IP are two interrelated protocols that are part of the Internet protocol suite. While TCP operates on the OSI Transport Layer and breaks data down into packets, IP operates on the OSI Network Layer and handles the routing of packets over the computer network.

Simple Network Management Protocol, or SNMP, is a TCP/IP standard protocol that (a) is used to manage and control IP gateways and the networks to which they are attached, (b) uses IP directly, bypassing the masking effects of TCP error correction, (c) has direct access to IP datagrams on a network that may be operating abnormally, thus requiring management, (d) defines a set of variables that the gateway must store, and (e) specifies that all control operations on the gateway are a side-effect of fetching or storing those data variables, i.e., operations that are analogous to writing commands and reading status.

Modem digital printing devices are often sophisticated enough to provide up-to-date device and print job status to administrators and users through the network protocols, described above. Using SNMP, an administrator is able to not only remotely access the device, but also able to remotely configure the device. Although very powerful as a management protocol, SNMP has one serious drawback, which is the lack of adequate security. SNMP has very limited security built into it. In a computer network, this equates to any user capable of viewing the resources available on a device. Virtually all users who have visibility to the printing device will be able to retrieve or even modify the device parameters. Visibility, as used herein means having the awareness of the status of a resource, which may or may not involve actually monitoring the resource.

Without built in security features, it is desirable to have some mechanism for administrators to restrict visibility of the device to a smaller group of users. Enterprise firewalls are capable of blocking SNMP traffic from the Internet, however these do little to prevent SNMP access on the intranet side of the firewall. Although routers are capable of filtering network packets, there may not be a router located on an intranet.

Thus, there exists a need for a method and system capable of restricting visibility of a device on a network, capable of implementation on any IP-based network, provide an alternative to network traffic management without adding a sophisticated router, and have minimal impact upon performance.

### Summary of the Present Invention

In accordance with the present invention, there is provided a method and system capable of providing administrators with the ability to restrict device visibility to a small group of users. The method comprises the steps of specifying an address range to be associated with a data packet. One or more filters are then generated, corresponding to the administrator defined address range. The filters include a reference address, an address mask, and an instruction representing a desired action to be taken for a matched address. The filter then receives an incoming packet, and compares the source address of the packet to the reference address to determine a correlating address. The filter then executes the instruction representing the action according to the source address, either allowing the packet forward or rejecting the packet and dropping the packet. To generate the correlating address, the filter first performs a bitwise AND operation between the source address and the address mask. Next the filter performs a bitwise AND operation between the reference address and the address mask. The two outcomes are then compared. If the outcomes equal each other, the correlating address results. If the outcomes do not equal each other, the source address is outside the specified range.

Further in accordance with the present invention, there is provided a system capable of implementation on any IP-based network, which provides an alternative to network traffic management without adding a sophisticated router, and has a minimal impact upon network performance. The system includes means adapted for specifying an address range associated with a data packet. A system administrator determines the source address range for which the filter is to either allow or reject. The system also uses means adapted for generating at least one filter corresponding to the specified address range. The one or more filters are made of a reference address, an address mask, and an instruction representing a desired action to be taken for a correlating address. The system has a means adapted for receiving an incoming packet, and means adapted for comparing a source address of the incoming packet to the reference address to determine a correlating address. Also within the system, there is provided means adapted for executing the instruction representing the desired action in accordance with the source address of the incoming packet.

Additional objects, advantages and novel features of the invention will be set forth in part in the description which follows, and in part will become apparent to those skilled in the art upon examination of the following or may be learned by practice of the invention. The objects and advantages of the invention may be realized and attained by various structures and methods as covered by the patent claims.

### Brief Description of the Drawings

The accompanying figures incorporated in and forming a part of the specification, illustrates several aspects of the present invention, and together with the description serve to explain the principles of the invention. In the figures:
FIG 1 is a block diagram of a component of the method envisioned by the present invention; and
FIG 2 is a flow chart diagram of the address filtering method envisioned by the present invention; and
FIG 3 is a block diagram representative of a network computer system.

### Detailed Description of Preferred and Alternate Embodiments

The present invention is directed to a system and method for an administrator to restrict access to a device parameter over a distributed computer system. More particularly, the present invention is directed to a method for employing a packet filter implemented within a computer communications protocol. As discussed herein, the Simple Network Management Protocol (SNMP) will be used in the preferred embodiment; however, one of ordinary skill in the art will appreciate that the use of the aforementioned and below described invention need not be limited to SNMP. Other protocols, including, but not limited to, IP, TCP, HTTP, FTP, and the like, are also contemplated by the present invention, and the packet filter may be built into any agent correspondingly related to the communications protocol.

An IP address filter resides within an SNMP agent and is tasked with filtering incoming SNMP packets. The filter comprises a reference IP address, an address mask and an action to be taken for matched addresses, which may either be "allow" or "reject". The address mask is set by an administrator, and determines the range of addresses to be allowed. The mask comprises a 32-bit bitmap which specifies the bits in a reference address that need to be matched by a source address of the incoming packet. The reference address is input by the administrator, enabling the filter to compare addresses and render a decision on whether or not an incoming packet source address "matches" the reference address. The administrator then determines the appropriate course of action to be taken by the filter when a matched address is ascertained.

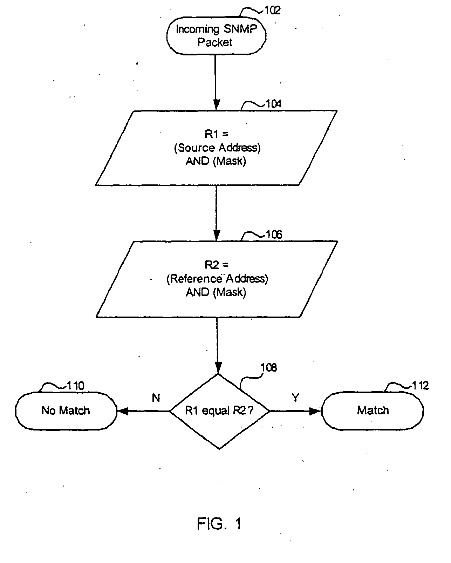

Turning now to FIG 1, there is shown a block diagram of the matching process contemplated as a component of the filter implemented in the present invention. The filter receives an incoming SNMP packet at step 102. It should be appreciated by those in the art that the SNMP packet filter acts on those packets destined to a fixed port, i.e., port 161 for SNMP. It should further be understood by those skilled in the art that the port number associated with the protocol being used, e.g., HTTP, FTP, IP, TCP, and the like, is not needed because protocol filtering is not contemplated by the present invention.

At step 104, the source address, which is contained in every header associated with a packet in the IP based networks, is ascertained by the filter. The bitwise-AND value of the source address and the address mask is then determined. By way of explanation, a bitwise operator treats its operands as a vector of bits rather than a single number. Boolean bitwise operators combine bit N of each operand using a Boolean function (NOT, AND, OR, XOR) to produce bit N of the result. For example, a bitwise AND operator ("&" in the C programming language) would evaluate 13 & 9 as (binary) 1101 & 1001 = 1001 = 9, whereas, the logical AND, (in C, designated as "&&") would evaluate 13 && 9 as TRUE && TRUE = TRUE = 1. In some languages, e.g. Acorn's BASIC V, the same operators are used for both bitwise and logical operations. This usually works except when applying NOT to a value x which is neither 0 (false) nor -1 (true), in which case both x and (NOT x) will be non-zero and thus treated as TRUE. Other operations at the bit level, which are not normally described as "bitwise" include shift and rotate.

Having ascertained the bitwise-AND value of the source address and the address mask at step 204, the filter proceeds to step 106. At step 106, the bitwise-AND value of the reference IP address and the address mask is determined. The two bitwise-AND results from steps 104 and 106, respectively, are then compared at step 108. If the result of each is the same, that is source address bitwise-AND value equals reference address bitwise-AND value, the source address and the reference address are said to match 112. If the result between the bitwise-AND value of the source address and the bitwise-AND value of the reference address are not the same, the bitwise-AND source address and the bitwise-AND address do not match 110.

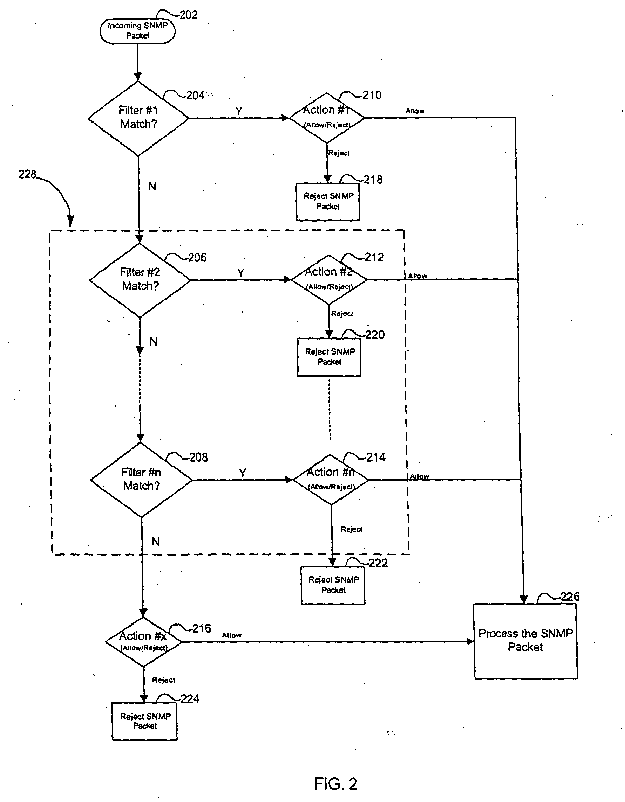

Turning now to FIG 2, there is shown a method of operating the filters contemplated herein. The invention of this embodiment may include multiple filters, where an incoming packet may make it past a first filter, but be caught by a subsequent filter. For exemplification purposes, the additional bank of filters denoted as 128, will be addressed in detail following the initial description of the embodiment involving a single filter, filter #1. As shown in FIG 2, the method begins by receiving an incoming packet at step 202. The packet is received by filter #1 in step 204 and a determination of whether or not the source address of the packet matches the reference address of filter #1 is made. The process discussed above referencing FIG 1, is undergone in filter #1 and two possible determinations may be output. The first determination, that the source address of the incoming packet matches the reference address of filter #1 progresses the system to step 210, where the corresponding action #1 will occur. As shown, in the event that the action #1 corresponding to a matched address is to reject (block) the incoming packet from proceeding, the packet is rejected at step 218 and dropped. In such an event, the system will not reply to the sent address, but will simply drop the packet and await reception of the next packet. In the event that the action #1 corresponding to the matched address of step 204 is to allow the packet to proceed, the packet is processed at step 226.

Returning to step 204, when the determination is made that the source address of the incoming packet does not match the reference address of filter #1, i.e., the source address is out-of-range of the specified address, the packet proceeds to action #x at step 216. While the action specified in filter #1 will be imposed upon packets with a matched source address, filter #1 will also imply that the counter-action will be imposed upon packets with unmatched source addresses. That is, if filter #1 set action #1 at 210 to be allow the matched source address packet, it is intuitive to filter #1 to set action #x to reject the unmatched source address packet at 216. Thus, action #x corresponds to the opposite action undertaken in action #1. For example, action #1 was to reject a matched source address packet in step 210, action #x will allow an unmatched source address packet to proceed to step 226. Therefore, if action #1 were set to accept a matched source address packet in step 210, action #x would be set to reject and ignore at step 224.

Further explanation may best be accomplished by the following example. An administrator is desirous of blocking all traffic to a device, except for traffic originating from IP address range 159.119.44.0 to 159.119.45.255. The administrator will first specify a filter with the parameters, "action=allow; address=159.119.45.168; mask=255.255.254.0". The "address" parameter can be any IP address within the specified range. The mask of "255.255.254.0" means that the two most significant octets in the source address of the incoming packet must match the same two octets of the reference address, i.e., the source address must begin with 159.119. The least significant bit of the third octet ("45") and the entire fourth octet ("168") will not be checked while comparing the two addresses. Effectively, the two most significant octets of the source address must be "159.119." and the least significant octet (fourth octet) may be any number between 0-255. The third octet can be 44 or 45 because the least significant bit can be either 1 or 0.

If the mask in the above example was "255.255.252.0", the two least significant bits of the third octet will not be checked. Therefore, the address range becomes 159.119.44.0 to 159.119.47.255. To determine the least significant bits, the octets (a networking term for eight (8) bits) are first converted into binary and the numbers corresponding to the appropriate bits will be determined. Therefore, in the second range depicted above, 255-252 = 3, or 0011. Using these two least significant numbers, the filter is able to ascertain the range of addresses incorporated, e.g., 159.119.44.0-159.119.47.255. Thus, when the filter receives an incoming packet denoting a source address of 159.119.46.130, the filter will follow the action (allow) accorded a matching address. However, should the source address of the incoming packet be 159.119.60.32, the filter will drop the incoming packet and not furnish a reply, as the address 159.119.60.32 fails to fall within the range of 159.119.44.0-159.119.47.255.

For a more refined control of incoming traffic on a computer network, the invention contemplates the use of multiple filters, acting in concert to control the incoming packets and visibility to devices residing on the network. In this embodiment, the source address of an incoming packet will be tested at a first filter. If there is a match, the packet will be taken and processed as explained above regarding the single filter. In the event that the source address of the incoming packet is out-of-range, i.e., not a match, to the reference IP address residing in the first filter, the second filter will receive the packet. Upon determination of a match with the reference IP address contained within the second filter, the corresponding action stored thereon will be performed. In the event that the source address of the incoming packet fails to match the reference IP address of the second filter, the packet will proceed to the next filter in the bank of filters 228 and so on.

Returning to FIG 2, there is illustrated an additional bank of filters 228, comprising a number of filters, beginning with filter #2 and ending with filter #n. It will be understood by those of ordinary skill in the art that the number of filters need only be limited by the number the administrator desires. Upon a negative determination of a match with filter #1 in step 204, the packet progresses to filter #2 at step 206. Here, filter #2 determines if the source address of the incoming packet matches the reference IP address it stores. The matching is determined in accordance with the procedures described above and the bitwise-AND calculations and operations are carried out. In the event that the result of the operations performed by filter #2 in step 206 is a matched address, the system progresses to step 212, where the action corresponding to the matched address is performed. If the action performed in step 212 is set by filter #2 to allow the matched source address packet, the packet is shunted to step 226 for processing. When the action to be performed in step 212 is set by filter #2 to block or reject the incoming packet having a matched source address, the packet is rejected and dropped from the system at step 220. It will be appreciated by one of ordinary skill in the art that no reply is sent to the originator of the dropped packet, nor is any such reply required.

Upon the determination in step 206 that the source address of the incoming packet is not a match for the reference IP address stored in filter #2, the incoming packet is forwarded on to the next filter, filter #3 (not shown) all the way down to the final filter, filter #n. As previously discussed, the number of filters need not be limited to the three filters shown, but rather, any number of filters, as decided upon by the system administrator, may be incorporated into the present invention. As shown in FIG 2, the incoming packet has been received by filter #n in step 208 for analysis. The filter #n will process the source address of the incoming packet to determine if a matching address may be found in the filter #n reference IP address. In the event that a match has been found at step 208, the filter #n then performs the action #n 214, which was set to correspond to the matching address. When the action #n is to reject or drop the matching source address incoming packet, the packet is sent to step 222, wherein the incoming packet is dropped. However, if the incoming packet with the matching source address is to be allowed according to step 214, the incoming packet is forwarded onward to processing at step 226.

When filter #n determines at step 208 that the source address of the incoming packet does not match the reference IP address stored therein, the system proceeds to step 216. At step 216, action #x, which is the counter-action to the last filter's action, or action #n. Thus, if action #n allowed the packet, action #x acts to reject and vice-versa. Step 216 provides for two possibilities, the first allowing the packet with the unmatched source address to proceed to processing at step 226 or the second rejecting and dropping the packet at step 224. The filtering will stop once a match has been found. In the event, as described above, the source address falls outside the range of each and every filter, the counter action of the last filter will be imposed on the packet, hence the use of action #x at 216. It will be appreciated by those skilled in the art that the order of the filters is important as they are executed sequentially from first to last. Thus, an address may be allowed in one filter and rejected in another. The system administrator must determine the priority for each filter and assign them accordingly.

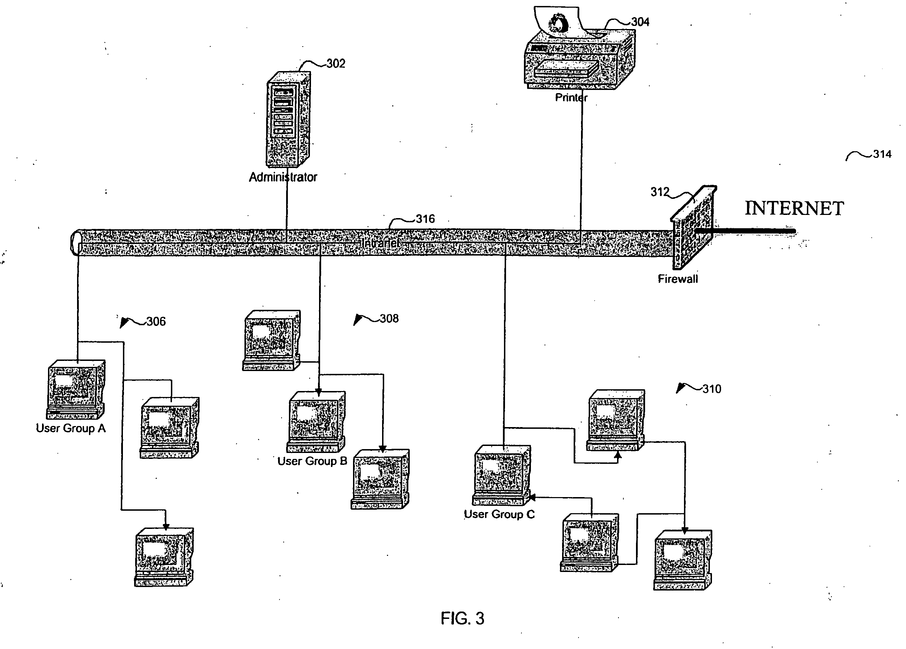

Turning now to FIG 3, there is shown a representative computer network upon which the present invention may be implemented. The system comprises a server/administrator computer 302, multiple user groups 306, 308, and 310, and a multifunction peripheral device 304. These hardware components interact with each other via the intranet 316. As discussed previously, the intranet may have a slightly higher level of security from packets attempting to enter via the Internet 314 as a result of the firewall 312. Thus, the filtering aspects of the present invention will be implemented within the intranet 316. An administrator 302 assigns IP or source addresses to each user computer in user group A 306, user group B 308, and user group C 310, as well as an IP address for the multifunction peripheral device 304. The present invention enables the administrator 302 to selectively enable or restrict the user groups 306, 308 and 310 from viewing or altering the configuration of multifunction peripheral device 304.

For example, the administrator assigns user group A 306 one set of IP addresses 159.119.45.168-159.119.45.171, group B 310 another set of IP addresses 159.119.45.172-159.119.45.175, and group C 310 a third set of IP addresses 159.119.45.176-159.119.45.180. The sets of IP addresses are selected such that no overlap between the groups is created. It will be appreciated by those skilled in the art that the addresses chosen are for exemplary purposes only and do not limit the present invention to those addresses with the number of devices shown on FIG. 3. Having thus allocated addresses for each device, the administrator 302 then determines what the acceptable range of addresses will be allowed access to the multifunction peripheral 304 configuration. The administrator 302 may set a filter or filters allowing packets originating from addresses in group A 306 access, but dropping packets originating from groups B 308 and C 310. Alternatively, the administrator may enable filters dropping packets from addresses originating in groups A 306 and C 310, but allowing packets originating from addresses in group B 308 to be processed by multifunction peripheral device 304. Similarly, the administrator 302 may enable filters to limit the allowable addresses to only those belonging to groups A 306, B 308 and C 310, while restricting those addresses traveling from the Internet 314 through the firewall 312 to the multifunction peripheral device 304.

The filters, as utilized herein, may be assigned, modified, or deleted by the administrator though a user interface, e.g., web administration, and are permanently stored in the system configuration database, common in Windows systems, or in the per service configuration file, which is common in Unix-based systems. The SNMP service loads the filters at start-up. The filtering method, as envisioned by the present invention, is invoked after a packet is received from the network. If the address matching, as described and claimed below, fails, no reply will be returned, which practically makes the service invisible to the applications at the source address. The filtering method will not act to impede the performance of services as only logical operations are involved. In the presence of a large number of filters, one skilled in the art will recognize that, although still quite efficient, it is desirable to arrange the filters so that a decision, allow or reject, can be made for any given packet by at least a number of filters.

The foregoing description of a preferred embodiment of the invention has been presented for purposes of illustration and description. It is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of the ordinary skilled in the art to utilize the invention in various embodiments and with various modifications as are suited to the particular use contemplated. All such modifications and variations are within the scope of the invention as determined by the appended claims when interpreted in accordance to the breadth to which they are fairly, legally and equitably entitled.

It is explicitly stated that all features disclosed in the description and/or the claims are intended to be disclosed separately and independent from each other for the purpose of original disclosure as well as for the purpose of restricting the claimed invention independent of the composition of the features in the embodiments and or the claims. It is explicity stated that all value ranges or indications of groups of entities disclose every possible intermediate value or intermediate entity for the purpose of original disclosure as well as for the purpose of restricting the claimed invention, in particular as limits of value ranges.

## Claims

1. A method for an administrator to restrict access to a device parameter over a distributed computer system, the steps comprising:
specifying an address range associated with a data packet;
generating at least one filter corresponding to the specified address range, wherein the filter includes,
a reference address,
an address mask, and
an instruction representative of a desired action to be taken for a correlating address;
receiving an incoming packet;
comparing a source address of the incoming packet to the reference address to determine a correlating address; and
executing the instruction representative of the desired action in accordance with the source address of the incoming packet.

2. The method of claim 1, the comparing step further comprising:
performing a bitwise AND operation between the source address and the address mask;
performing a bitwise AND operation between the reference address and the address mask; and
comparing the outcomes of the bitwise AND operations, wherein equal outcomes results in the correlating address, and wherein not equal outcomes results in an address outside the specified range.

3. The method of claim 1 or 2, wherein the desired action is executed in response to a source address inside the specified address range.

4. The method of claim 1 or 2, wherein the desired action is executed in response to a source address outside the specified address range.

5. The method of any of claims 1 to 4, wherein the desired action includes an instruction to block the incoming packet.

6. The method of any of claims 1 to 5, wherein the desired action comprises the step of dropping the incoming packet.

7. The method of any of claims 1 to 4, wherein the desired action comprises the step of allowing the incoming packet.

8. The method of claim 7, further comprising the step of processing the incoming packet.

9. A system adapted for allowing an administrator to restrict access to a device parameter over a distributed computer system, comprising:
means adapted for specifying an address range associated with a data packet;
means adapted for generating at least one filter corresponding to the specified address range, wherein the filter includes,
a reference address,
an address mask, and
an instruction representative of a desired action to be taken for a correlating address;
means adapted for receiving an incoming packet;
means adapted for comparing a source address of the incoming packet to the reference address to determine a correlating address; and
means adapted for executing the instruction representative of the desired action in accordance with the source address of the incoming packet.

10. The system of claim 9, the comparing step further comprising:
means adapted for performing a bitwise AND operation between the source address and the address mask;
means adapted for performing a bitwise AND operation between the reference address and the address mask; and
means adapted for comparing the outcomes of the bitwise AND operations, wherein equal outcomes results in the correlating address, and wherein not equal outcomes results in an address outside the specified range.

11. The system of claim 9 or 10, wherein the executing means is adapted to perform the steps of any one of claims 3 to 8.

12. The system of any one of claims 9 to 11, wherein the filter is incorporated inside an SNMP agent.

13. The system of any one of claims 9 to 12, wherein the source address and the reference address are an Internet Protocol address.
